# EUROPEAN PATENT SPECIFICATION

(11) **EP 3 022 113 B1**
(45) Date of publication and mention of the grant of the patent: **21.11.2018**
(21) Application number: 14826259.5
(22) Date of filing: 18.07.2014
(51) Int. Cl.: G01V 1/38, B63C 7/26, B63C 11/48, B63B 51/00

(54) **MONITORING SYSTEM, COMPONENTS, METHODS, AND APPLICATIONS**
ÜBERWACHUNGSSYSTEM, KOMPONENTEN, VERFAHREN UND ANWENDUNGEN
SYSTÈME DE SURVEILLANCE, COMPOSANTS, PROCÉDÉS ET APPLICATIONS

(30) Priority: 18.07.2013 US 201361847668 P; 19.12.2013 US 201361918255 P
(43) Date of publication of application: 25.05.2016
(73) Proprietor: Fairfield Industries Incorporated, Sugar Land, Texas 77478 (US)
(72) Inventor: HOPEWELL, William, Richmond, Texas 77406 (US); THOMPSON, James N., Sugar Land, Texas 77479 (US); BASNIGHT, Matthew, Richmond, Texas 77406 (US); MORRIS, Michael, Sugar Land, Texas 77479 (US)
(74) Representative: Vossius & Partner Patentanwälte Rechtsanwälte mbB
(86) International application number: PCT/US2014/047190
(87) International publication number: WO 2015/010017

(56) References cited:
- US-A1- 2005 098 377
- US-A1- 2005 098 377
- US-A1- 2008 008 037
- US-A1- 2008 265 895
- US-A1- 2009 251 991
- US-A1- 2011 228 636
- US-A1- 2013 100 764
- POTTER J R ET AL: "Visual and Passive Acoustic Marine Mammal Observations and High-Frequency Seismic Source Characteristics Recorded During a Seismic Survey", IEEE JOURNAL OF OCEANIC ENGINEERING, IEEE SERVICE CENTER, PISCATAWAY, NJ, US, vol. 32, no. 2, 1 April 2007 (2007-04-01), pages 469-483, XP011197182, ISSN: 0364-9059, DOI: 10.1109/JOE.2006.880427

## Description

This application is related to, and derives priority from, United States Provisional Patent Application 61/847,668 filed on July 18, 2013, and United States Provisional Patent Application 61/918,255 filed on December 19, 2013.

Embodiments of the invention are generally in the field of monitoring systems, apparatus, techniques, and applications thereof. More particularly, embodiments and aspects of the invention pertain to such monitoring in a marine environment to monitor, identify, track, and otherwise characterize marine species and/or other marine objects and the effect(s) of various stimuli on these marine species and/or other marine objects. Even more particularly, embodiments and aspects of the invention pertain to a real-time, marine (surface or sub-surface), acoustic-based monitoring system, apparatus, techniques, and applications thereof.

Commercial operations at sea can impact the marine environment including plants, animals, and mammals in this environment. In the fishing industry, for example, protected, endangered, or even non-targeted species can inadvertently be caught, injured, and/or killed. Likewise, surface and sub-surface marine seismic and oil/gas exploration operations can inadvertently disturb the marine environment. Further information can be obtained from The Bureau of Ocean Energy Management of the U.S. Department of the Interior (BOEM) and the National Marine Fisheries Service of the U.S. Department of Commerce (NMFS).

US 2008/008037 A1 relates to the field of marine seismic methods and equipment used in marine seismic exploration, and more specifically to methods and systems for more accurately estimating acoustic propagation velocity in marine environments in a cost effective manner.

US 2005/098377 A1 relates to a seismic data acquisition device comprising permanent pickups set on the sea bottom and intermittently connectable to data acquisition stations.

Potter J.R. et al.: "Visual and Passive Acoustic Marine Mammal Observations and High-Frequency Seismic Source Characteristics Recorded During a Seismic Survey", IEEE Journal of Oceanic Engineering, vol. 32, no. 2, 1. April 2007, pages 469-483 relates to marine mammal observation statistics, high-frequency seismic source characteristics, and example denoising of marine mammal acoustical recordings using data collected during the mitigation.

The inventors have recognized that it would be advantageous and beneficial to have appropriate monitoring systems, system components, and methods for detecting, tracking, recording, analyzing, communicating and otherwise obtaining and manipulating data indicative of marine presence and/or activity, and using such data to avoid or mitigate detrimental impact on the marine environment. The embodied invention as described herein below and as set forth in the appended claims enables such monitoring systems, system components, and methods for realization of the recognized advantages and benefits.

An embodiment of the invention is a real-time, marine acoustic-based monitoring system. The system includes a receiver; and a plurality of sensor packages (SPs) that are operably communicable with the receiver, wherein each sensor package further comprises a housing; at least one acoustic sensor; a timing source; a power source; a data memory; and a data acquisition component; wherein at least some of the SPs are disposed within the marine environment volume; and wherein the SPs are configured to detect a high frequency associated with a phenomenon in a range 200 Hz < f high ≤ 150 kHz and a low frequency associated with a different phenomenon in a range 0 ≤ f low ≤ 200 Hz within the marine environment volume, and are configured to temporally correlate the low frequency associated phenomenon and the high frequency associated phenomenon. In various non-limiting aspects, the real-time, marine acoustic monitoring system may further include or be further characterized by the following features or limitations:
- wherein at least some of the SPs contain an additional sensor to detect at least one of a salinity, temperature, turbidity, pH, organic material, dissolved solids, phytoplankton, light flux, bio-luminescence, O₂, CO₂, water currents, and object velocities measurement;
- wherein at least some of the SPs contain an additional sensor to detect at least one of a clock synchronization data, high, medium, and low frequency acoustic data, very low frequency (e.g., earthquake) data, (low frequency, e.g., < 100 Hz) seismic data, and particle velocity data;
- wherein the SPs are autonomous and self-contained;
- wherein the timing source is an atomic clock;
- wherein each SP is programmed with at least one of an acoustic recognition algorithm and an acoustic classification algorithm that can generate a data packet for transmission to the receiver;
- wherein the receiver is disposed in one of a surface vessel, an ROV, an AUV, a buoy, in a water column, on a sea bed, on land;
- further comprising an instrumentation/computing unit that is capable of generating detection and classification results;
- wherein each SP can transmit a data package either synchronously on a schedule or asynchronously.

An embodiment of the invention is a method for monitoring a marine environment volume, comprising: using a real-time, marine acoustic monitoring system comprising a receiver and a plurality of sensor packages, SPs, wherein each sensor package further comprises a housing, at least one acoustic sensor, a timing source, a power source, a data memory, and a data acquisition component;
disposing at least some of the SPs within the marine environment volume;
detecting a high frequency associated with a phenomenon in a range 200 Hz < f_{high} < 150 kHz within the marine environment volume; detecting a low frequency associated with a different phenomenon in a range 0 < f_{low} < 200 Hz within the marine environment volume; and, temporally correlating the low frequency associated phenomenon and the high frequency associated phenomenon. In various non-limiting aspects, the method for monitoring a marine environment volume may further include or be further characterized by the following features or limitations:
- further comprising detecting a high frequency associated with a marine object before detecting a low frequency associated with a marine seismic event, detecting the low frequency associated with a marine seismic event, and detecting the high frequency associated with the marine object after detecting the low frequency associated with the marine seismic event;
   - further comprising detecting the high frequency associated with a moving marine object;
   - further comprising temporally correlating a detection of an acoustic signal from a source at an unknown location at a plurality of the SPs and triangulating a known location of the source;
   - further comprising disposing the receiver at at least one location of a sea bed, suspended in the marine environment volume, on a surface vessel, in an ROV, in an AUV, in a buoy, and on land;
   - further comprising creating a data packet in at least one of the SPs and transmitting it synchronously or asynchronously;
   - further comprising enabling an alert mode in at least one of the SPs that communicates to a data receiver;
      - further comprising disposing at least some of the SPs on a bottom surface of the marine environment volume.
      - further comprising disposing at least some of the SPs suspended in the marine environment volume;
      - further comprising disposing at least some of the SPs external to the marine environment volume;
   - wherein at least some of the SPs contain an additional sensor to detect at least one of a salinity, temperature, turbidity, pH, organic material, dissolved solids, phytoplankton, light flux, bio-luminescence, O2, CO2, water currents, and object velocities measurement;
   - wherein at least some of the SPs contain an additional sensor to detect at least one of clock synchronization data, high, medium, low frequency acoustic data, very low frequency (e.g., earthquake) data, (low frequency, e.g., < 100 Hz) seismic data, and particle velocity data;
   - further comprising communicating between the SP and another unit including at least one of a different SP, a surface vessel, an ROV, a sub-sea transceiver, and an AUV, and a single and/or a multi-component seismic sensor;
   - further comprising calibrating the SPs when they are disposed in the marine environment volume.

The real-time, marine acoustic-based monitoring system includes sub-sea instrumentation packages including sensors (SPs) for, e.g., recording acoustic signals and other sensor data that allow elapsed and/or real-time, *in-situ* data communications and control of the individual instrumentation packages and system configuration. The sensor packages are autonomous and self-contained, without physical connection to the surface or each other. Each SP may have wireless, acoustic, and/or optical modules or components to enable the communication between SPs and/or other collection points such as surface vessels, ROVs, sub-sea transceivers, or AUVs. The SPs may further include additional single or multi-component seismic or other functionalized sensors for collecting data that may be used in combination with acquired acoustic data (which may relate to environmental conditions as described below as well as to marine mammal acoustic data) to assist in the identification, localization, and/or changes in the characteristics and/or population(s) of mammals in the sensed environment or other stimuli such as, but not limited to, radiation, movement, and any other detectable stimuli of real or potential interest.
Fig. 1 illustrates an exemplary sensor package according to an illustrative aspect of the invention.
Fig. 2 illustrates an array of SPs operationally deployed on a sea bottom in a marine environment volume according to an illustrative aspect of the invention.
Fig. 3 is a top cross sectional schematic view of sensor package (SP) illustrating the placement of its various components according to an illustrative aspect of the invention.
Fig. 4 is a schematic block diagram of a sensor package showing certain components/modules of the sensor package, according to an illustrative aspect of the invention.
Fig. 5 is a flow chart diagram setting forth at high level the process of a complete monitoring survey operation, according to an illustrative aspect of the invention.

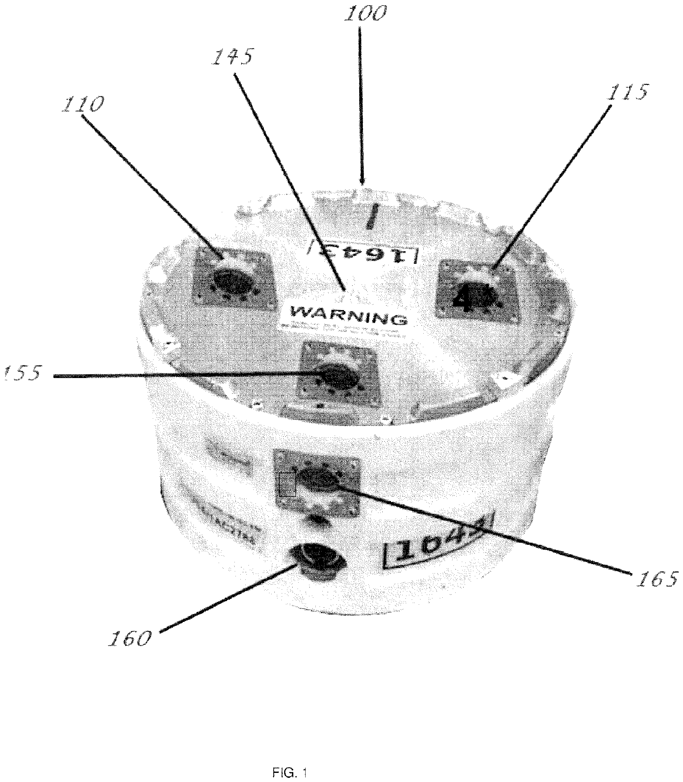

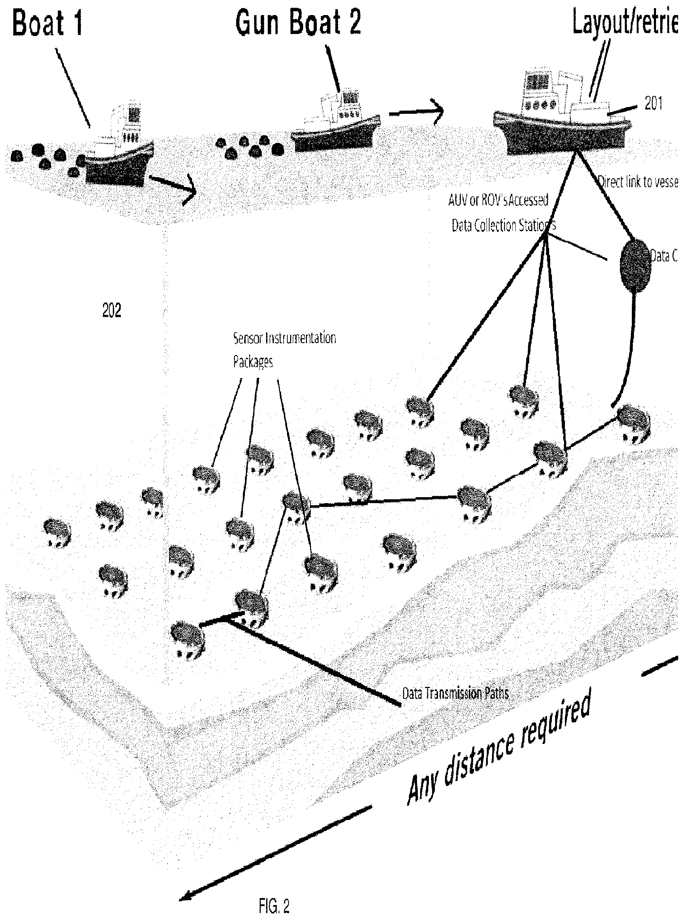

Fig. 1 illustrates an exemplary sensor package (SP) 100. Fig. 2 illustrates an array of SPs operationally deployed on a sea bottom in a marine environment volume. Fig. 1 is a photo reproduction of a FairfieldNodal (Sugarland, TX) Z3000 autonomous ocean bottom sensor (OBS) containing internal seismic sensors 145 and modified to accept additional sensor types through ports in the top surface; e.g., optical sensor 110, chemical sensor 115, and other user selectable sensors 155. Also illustrated are a port 165 for pressure and temperature sensors and a port 160 for data communications and power.

Fig. 2 more particularly illustrates a non-limiting, exemplary ocean bottom sensor (OBS) grid in a water column, which defines a volumetric exploration space, e.g., 1800 km³ (20 km x 30 km x 3 km (deep). The SP units are independent of each other in the detection mode.

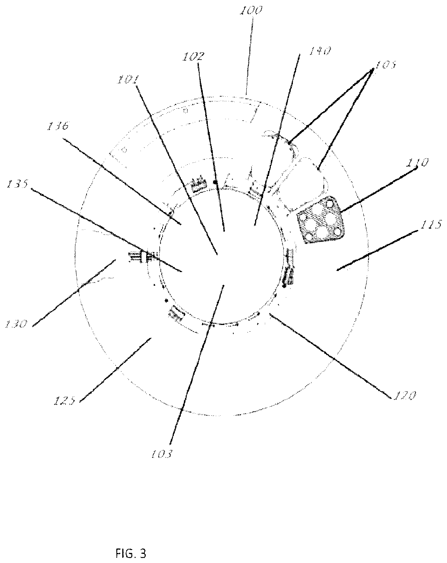

Fig. 3 is a top cross sectional schematic view of SP 100. Each SP unit includes at least one acoustic sensor 102, a timing source 135, a power source 125, data memory (storage and control) 140, data acquisition electronics 136 (data acquisition and processing), and data bus 120. A communications module (data extraction) 130 may also be provided. Some SPs may contain additional sensors (e.g. (but not limited to), particle motion 101 and vibration 103 sensors, optical sensors 110, chemical sensors 115) to detect, e.g. (but not limited to), salinity, temperature, turbidity, pH, organic material, dissolved solids, phytoplankton, light flux, bio-luminescence, O₂, CO₂, water currents, sound levels, and object velocities. This data may be referred to herein as 'slow' data. Commercial techniques for such benchtop or shallow water measurements are known in the art, however they have never been co-located with seismic quality acoustic instrumentation near or on the sea floor with the timing capability to triangulate and correlate various phenomena. The customizable monitoring system allows the user to select among the set of available technologies to configure the system for particular requirements. Each measurement subsystem has power and data linkage to the main node. The data is acquired by the data acquisition subsystem 136 according to the user defined schedule and sampling plan. More continuous data types can be assigned dedicated resources as required.

Other accessible data, which may be referred to herein as 'fast' data includes (but is not limited to) triangulation data, clock synchronization data, high, medium, and low frequency acoustic data, very low frequency (e.g., earthquake) data, and (low frequency, e.g., < 100 Hz) seismic data. The SPs have pressure housings to protect the electronics and other water- or pressure-sensitive components.

Acoustic, wireless, and/or optical communication modes are individually, or in combination, provided, wherein each of the modes can be optimized for the type and volume of data and range of transmission involved. For example, the acoustic communication links utilize frequencies below 2 MHz that propagate distances sufficient to reach the ocean surface or between pairs of SPs. The distances between SPs can be as large as 100 km or more. The acoustic link can advantageously be used for command and control, and transmission of data packets on the order of 50 Mbytes or less per transmission. The acoustic transceivers can be capable of utilizing multiple frequencies selected for short range transmission or long range transmission.

The optical communications may utilize LED and/or laser or other suitable light sources tuned to operate in water environments. The optical link may be implemented as a transceiver allowing fast command and control of the data communications link. Typical optical wavelengths are advantageously in the blue and green sections of the optical spectrum. The optical links typically operate at distances on the order of 500 meters or less and are capable of passing (large) amounts of data (on the order of 100 Mb or greater) and can transmit at several hundred Mbit/sec. Optical links may be used for any applicable size data package. The data transmission rate can be adjusted to compensate for water turbidity and distance by reducing the data rate such that the data transmission error rate is low enough to not require multiple retransmission sequences. Alternatively, data validity can be verified by retransmitting the same data packet multiple (e.g., two or more) times and making multiple comparisons of the transmitted packet.

All communication modes can be either sub-surface or surface-implemented. The entire system of acoustic sensors, as well as specialty sensors and data collection stations can be implemented sub-surface in order to simplify deployment and marine activity interference. The detected or targeted seismic entities such as, e.g., marine mammals, other marine species, and/or ships will be identified, counted, tracked, and the data transferred and saved for further analysis and/or reporting.

Suitable placement of the SPs can enable triangulation of the sources of various acoustic entities such as ships, mammals, or other acoustic sources. In an aspect, the SPs are nominally placed on the ocean bottom; however, they could be suspended in the water column as well. A highly accurate clock allows precise timing for detection of acoustic signals at multiple SPs and precise location of the source *via* triangulation. Atomic clocks may be used for this purpose.

Triangulation data uses time of flight data of sound in the water reaching a set of SPs. Generally, the speed of sound is approximately 1484 M/s. When the SPs are deployed, their positions are determined to high accuracy using methods and equipment well known in the seismic industry. Sound source locations can be computed by solving a system of linear equations treating the XYZ position of the source as an unknown, and the velocity of sound and arrival time at the sensors as known quantities. If water variables such as temperature, density, salinity are known, then the velocity of sound can be refined leading to increased accuracy. Ocean bottom seismic node positions are typically known to within a few feet. By repeating the triangulation measurements the vector track of the sound source can be established.

The data about the various acoustic entities can be communicated to a receiver station in real-time. The receiver station may be located on a ship, buoy, marine, or land location. For long range communications, the acoustic link will provide the necessary data. The communication subsystems or modules can utilize a receiver 201 designed to respond to the type of signal source and media such as an acoustic, optical, radio frequency, magnetic, fiber optic, or wired implementations. The receiver can be brought to or located anywhere within the appropriate range of the corresponding source. In the case that the SP units are recovered from the marine environment, the receiver can be a data download device onboard ship, platform, or land as appropriate. The real-time data and triangulation communications allow an acoustic count of entities in the entire water volume to be reported. For moving sources, the track of the source may be reported as well. The placement of the SPs is designed to cover the water volume of interest and in the case of a seismic survey at least the entire survey volume. For example, during the acoustic activity, the presence of marine mammals will be identified, tracked, and counted by the same instrumentation that was used before and after the acoustic activity was detected. Feedback to a ship or ships can be done in real-time for the water volume of interest. These results may be generated up to 24 hours per day and in all weather or water conditions. For seismic type operations, all the vessels involved can use this information immediately to mitigate environmental impact on marine mammals.

Acoustic or other signal-type beacons may be provided and used to calibrate the submerged SPs with respect to timing, acoustic response, or other parameters of interest. Sensor readings among the various types of sensors can be initially calibrated upon deployment by cross comparison to calibrated references onboard the deployment ship, underwater deployment vehicle, AUV, or ROV's. The calibration values can be updated when the SPs are visited. For acoustic signals, the comparison could be made to a source and reference located at or near the surface where the expected value at the sensor package is based on an amplitude/velocity/time model.

Each SP may have acoustic recognition and classification algorithms that may be used to generate data packets that will be transmitted to a receiver station. Depending on the type of data, various correlation and data analysis techniques published in statistics and numerical analysis references can be employed. Given the long deployment life of the sensor packages, changes in the analysis techniques local to the sensor nodes can be downloaded to the nodes *via* the communication links. References such as "Computer-based Numerical & Statistical Techniques," M. Goyal, ISBN0977858251 and "Numerical Methods of Statistics, Volume 1," John F. Monahan Cambridge University press, 2001, and Sheriff, R.E., 1984, Encyclopedic dictionary of exploration geophysics, Society of Exploration Geophysicists, are representative examples. For acoustical analysis, references such as "Automated categorization of bioacoustic signals: avoiding perceptual pitfalls," J Acoust Soc Am. 2006 Jan; 119(1): 645-53 and numerous other acoustic pattern recognition analysis articles are known in the scientific literature. A data packet can contain information related (but not limited) to, e.g., maintenance, status, raw data, processed data, timing data, and alert information. The data may be in summary or condensed format so that the data packets can be small as possible. This results in system power savings, especially as related to communication subsystems, which can be relatively power intensive. The receiver station can be located on the ocean floor, suspended in the water column, on a vessel, ROV or AUV. Additionally the detected acoustic events can be transmitted along with timing information to a more powerful instrumentation/computing unit that generates detection and classification results. Each SP may contain sensors and threshold detection capabilities that cause a data packet to be created and transmitted either synchronously on a schedule or asynchronously.

The sub-surface SPs can store and retain information for sub-surface transmission to an AUV or ROV type vehicle later in time.

The SPs may communicate among themselves, along a pathway that is either predetermined or established after deployment to account for limitations of certain communication pathways. This could be caused by sea floor structure, existing equipment, or noise sources, for example. For example, an *ad hoc* configuration could result in order to establish one or more data pathways. In some deployment configurations the SPs may not be able to communicate to a particular SP and that SP can be by-passed/hopped over as needed in a particular path. If the bypassed SP is not able to find another SP to use to relay its information, it can be visited by an ROV or AUV to pick up the data optically, acoustically, or by other techniques. The data paths may involve bypassing or hopping over particular SPs as determined by local conditions. Any of the data multiplexing communication techniques such as code division multiple access (CDMA), time division multiple access (TDMA), frequency division multiple access (FDMA), orthogonal frequency-division multiplexing (OFDM), and the like may be used to communicate. If desired, the data may be directed to selected units for accumulation and or processing.

The embodied system and method enable one to monitor and discern environmental activity within a desired marine volume over a period of time; e.g., monitoring could be done for one year to get a baseline reading and continued for 5-10 years to gather information on any environmental impact from the seismic operations. The marine volume of interest 202 has a user established boundary wherein acoustic sources of interest to be monitored are within the boundary. The user can define the specifics of the marine volume of interest using parameters such as regulatory requirements for sound levels, designated marine mammal protection areas, existing structures, shipping lanes, and the like. Using triangulation, the marine acoustic sources can be monitored within or without the boundary and, if they are crossing the boundary. One aspect of the invention establishes baseline metrics for marine sources within specified water regions by enabling the detection and discrimination of sources outside the specified water volume.

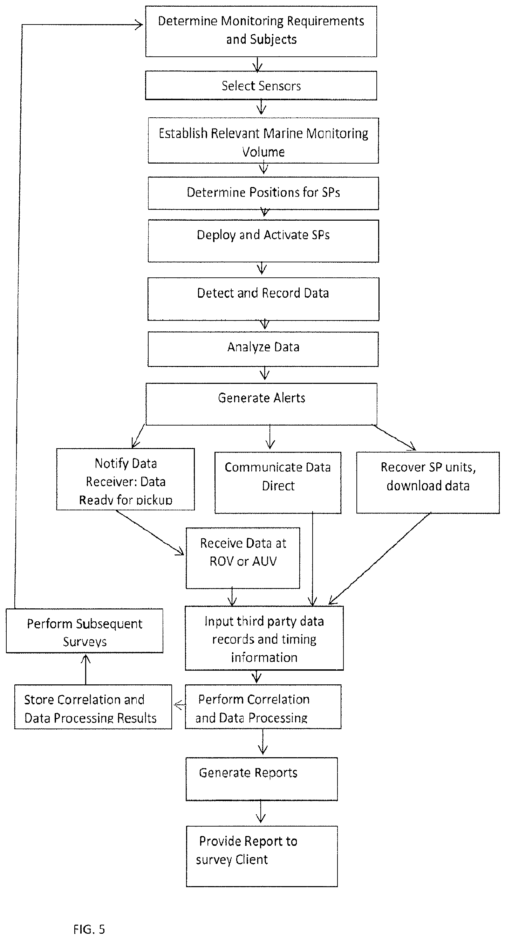

Fig. 5 is a flow chart that sets forth at high level the steps of planning, carrying out, and reporting a monitoring survey. Each and every one of the steps may not be necessary to complete a survey, and some steps or groups of steps may be carried out by different entities, as persons skilled in the art will appreciate.

To monitor such an exploration volume, the SP system embodied herein could surround a volume larger than the desired marine (exploration) volume. The embodied acoustic monitoring would identify a target(s) traversing the boundaries of the exploration volume as well as targets' movements within the exploration volume.

It is appreciated that ocean bottom seismic sensors (nodes) are designed to detect frequencies less than about 200 Hz (herein, 'low frequency noise'), while marine mammals (targets of primary interest in an aspect of the embodied invention), for example, emit frequencies in a range from around 30 Hz (large whales) to 150 kHz (dolphins) (herein, 'high frequency noise'). Note, seismic data is generated from energy reflected by subsurface lithological formations or fluid layers responsive to an acoustic signal that propagates into earth. In some cases, the seismic energy can be generated by geological events originating spontaneously deep within the earth. Seismic data resulting from these events is also known as passive seismic. Thus, related embodiments of the invention are apparatus and methods enabling detection, monitoring, and processing of the aforementioned high frequency noise, and its correlation (e.g., temporal) with the low frequency noise (i.e., seismic). This information would thus reveal or at least shed insight on the relationship, if any, between the marine seismic operation and the targeted environmental impact in the exploration volume.

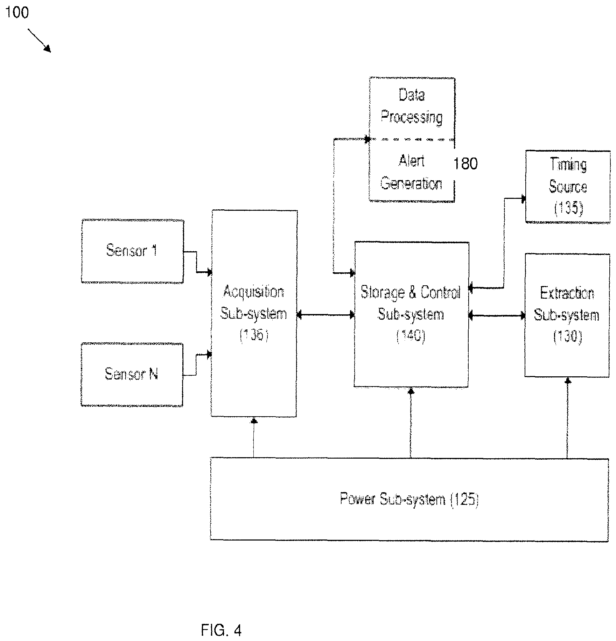

The embodied monitoring system and methods may provide high resolution positional information on a scale of 500 m or less. The system and method may utilize 'smart' components that enable an 'alert' mode in which the requisite time and effort to collect data from a sensor package (SP) will not be committed unless the SP communicates that it has data of interest to be collected. Alert data can contain a processed metric representative of the signal from a particular sensor where the original sensor output has undergone processing in order to transform it into a scale and value usable for comparison to threshold values for that parameter. If the threshold value is exceeded, the SP can take actions such as initiating a data packet communication with a receiver 201, or causing the SP to change its acquisition of, or processing of data, choice of data, storage of data, etc. The data packet transmission can be used to signal that the sensors have data that needs to be gathered. As illustrated in Fig. 4, a SP 100 may further contain an alert generating module 180. Fig. 4 further illustrates that any type and number, N, of sensors can be employed.

Embodiments and aspects of the invention are also directed at an indicia or form factor of the collected and processed data; i.e., its look, feel and presentation, and how this may be adjusted and packaged for use by a third party, as well as applications of use of such information. For example, information packages available to third parties may be in the form of tabulated raw data requiring further analysis; in a form that summarizes the targeted activity over the monitored time span; or, somewhere in-between; e.g., in a real time or time-lapsed streaming manner.

While several inventive embodiments and aspects have been described and illustrated herein, those of ordinary skill in the art will readily envision a variety of other means and/or structures for performing the function and/or obtaining the results and/or one or more of the advantages described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims, inventive embodiments may be practiced otherwise than as specifically described. Inventive embodiments of the present disclosure are directed to each individual feature, system, article, material, kit, and/or method described herein.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

The term 'about' means the amount of the specified quantity plus/minus a fractional amount (e.g., +10%, +9%, +8%, +7%, +6%, +5%, +4%, +3%, +2%, +1%, etc.) thereof that a person skilled in the art would recognize as typical and reasonable for that particular quantity or measurement. Likewise, the term 'substantially' means as close to or similar to the specified term being modified as a person skilled in the art would recognize as typical and reasonable; for e.g., within typical manufacturing and/or assembly tolerances, as opposed to being intentionally different by design and implementation.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively.

## Claims

1. A method for monitoring a marine environment volume, comprising:
using a real-time, marine acoustic monitoring system comprising a receiver and a plurality of sensor packages, SPs (100), wherein each sensor package (100) further comprises a housing, at least one acoustic sensor (102), a timing source (135), a power source (125), a data memory (140), and a data acquisition component (136);
disposing at least some of the SPs (100) within the marine environment volume: and using the SPs (100) to:
detect a high frequency associated with a phenomenon in a range 200 Hz < *f_{high}* ≤ 150 kHz within the marine environment volume;
detect a low frequency associated with a different phenomenon in a range 0 ≤ *_{flow}* ≤ 200 Hz within the marine environment volume; and
temporally correlate the low frequency associated phenomenon and the high frequency associated phenomenon.

2. The method of claim 1, further comprising:
detecting a high frequency associated with a marine object before detecting a low frequency associated with a marine seismic event;
detecting the low frequency associated with a marine seismic event; and
detecting the high frequency associated with the marine object after detecting the low frequency associated with the marine seismic event.

3. The method of claim 2, further comprising:
detecting the high frequency associated with a moving marine object.

4. The method of any of claims 1 to 3, further comprising:
temporally correlating a detection of an acoustic signal from a source at an unknown location at a plurality of the SPs (100) and triangulating a known location of the source.

5. The method of claim 4, further comprising:
disposing the receiver at at least one location of a sea bed, suspended in the marine environment volume, on a surface vessel, in an ROV, in an AUV, in a buoy, and on land.

6. The method of any of claims 1 to 5, further comprising:
creating a data packet in at least one of the SPs (100) and transmitting it synchronously or asynchronously.

7. The method of any of claims 1 to 6, further comprising:
enabling an alert mode in at least one of the SPs (100) that communicates to a data receiver.

8. The method of any of claims 1 to 7, further comprising:
disposing at least some of the SPs (100) on a bottom surface of the marine environment volume, and/or
disposing at least some of the SPs (100) suspended in the marine environment volume, and/or
disposing at least some of the SPs (100) external to the marine environment volume.

9. The method of any of claims 1 to 8, wherein at least some of the SPs (100) contain an additional sensor to detect at least one of salinity, temperature, turbidity, pH, organic material, dissolved solids, phytoplankton, light flux, bio-luminescence, O₂, CO₂, water currents, and object velocities, and/or
wherein at least some of the SPs (100) contain an additional sensor to detect at least one of clock synchronization data, high, medium, low frequency acoustic data, very low frequency (e.g., earthquake) data, (low frequency, e.g., < 100 Hz) seismic data, and particle velocity data.

10. The method of any of claims 1 to 9, further comprising communicating between the SP (100) and another unit including at least one of a different SP (100), a surface vessel, an ROV, a sub-sea transceiver, and an AUV, and a single and/or a multi-component seismic sensor, and/or
calibrating the SPs (100) when they are disposed in the marine environment volume.

11. A real-time, marine acoustic monitoring system comprising:
a receiver; and
a plurality of sensor packages, SPs (100), communicable with the receiver,
wherein each sensor package further comprises:
a housing;
at least one acoustic sensor (102);
a timing source (135);
a power source (125);
a data memory (140); and
a data acquisition component (136);
wherein at least some of the SPs (100) are disposed within the marine environment volume; and
wherein the SPs (100) are configured to detect a high frequency associated with a phenomenon in a range 200 Hz < *f_{high}* ≤ 150 kHz and a low frequency associated with a different phenomenon in a range 0 *≤ f_{low}* ≤ 200 Hz within the marine environment volume, and are configured to temporally correlate the low frequency associated phenomenon and the high frequency associated phenomenon.

12. The monitoring system of claim 11, wherein at least some of the SPs (100) contain an additional sensor configured to detect at least one of salinity, temperature, turbidity, pH, organic material, dissolved solids, phytoplankton, light flux, bio-luminescence, O₂, CO₂, water currents, and object velocities, and/or
wherein at least some of the SPs (100) contain an additional sensor configured to detect at least one of clock synchronization data, high, medium, and low frequency acoustic data, very low frequency (e.g., earthquake) data, (low frequency, e.g., < 100 Hz) seismic data, and particle velocity data.

13. The monitoring system of claim 11 or 12, wherein the SPs (100) are autonomous and self-contained, and/or
wherein the timing source is an atomic clock.

14. The monitoring system of any of claims 11 to 13, wherein each SP (100) is programmed with at least one of an acoustic recognition algorithm and an acoustic classification algorithm that can generate a data packet for transmission to the receiver.

15. The monitoring system of any of claims 11 to 14, wherein the receiver is disposed in one of a surface vessel, an ROV, an AUV, a buoy, in a water column, on a sea bed, on land.

16. The monitoring system of any of claims 11 to 15, further comprising an instrumentation/computing unit that is capable of generating detection and classification results.

17. The monitoring system of any of claims 11 to 16, wherein each SP (100) can transmit a data package either synchronously on a schedule or asynchronously.

## Patentansprüche

1. Verfahren zur Überwachung eines marinen Umgebungsvolumens, das aufweist:
Verwenden eines marinen akustischen Echtzeit-Überwachungssystems mit einem Empfänger und mehreren Sensorpaketen SPs (100), wobei jedes Sensorpaket (100) ferner ein Gehäuse, mindestens einen akustischen Sensor (102), eine Zeitgeberquelle (135), eine Stromquelle (125), einen Datenspeicher (140) und eine Datenerfassungskomponente (136) aufweist;
Anordnen mindestens einiger der SPs (100) im marinen Umgebungsvolumen; und
Verwenden der SPs (100), um:
eine Hochfrequenz in Zuordnung zu einer Erscheinung in einem Bereich von 200 Hz < f_{high} ≤ 150 kHz im marinen Umgebungsvolumen zu detektieren;
eine Niederfrequenz in Zuordnung zu einer unterschiedlichen Erscheinung in einem Bereich von 0 ≤ f_{low} ≤ 200 Hz im marinen Umgebungsvolumen zu detektieren; und
die der Niederfrequenz zugeordnete Erscheinung und die der Hochfrequenz zugeordnete Erscheinung zeitlich zu korrelieren.

2. Verfahren nach Anspruch 1, das ferner aufweist:
Detektieren einer Hochfrequenz in Zuordnung zu einem marinen Objekt vor Detektieren einer Niederfrequenz in Zuordnung zu einem marinen seismischen Ereignis;
Detektieren der Niederfrequenz in Zuordnung zu einem marinen seismischen Ereignis; und
Detektieren der Hochfrequenz in Zuordnung zum marinen Objekt nach Detektieren der Niederfrequenz in Zuordnung zum marinen seismischen Ereignis.

3. Verfahren nach Anspruch 2, das ferner aufweist:
Detektieren der Hochfrequenz in Zuordnung zu einem sich bewegenden marinen Objekt.

4. Verfahren nach einem der Ansprüche 1 bis 3, das ferner aufweist:
zeitliches Korrelieren einer Detektion eines akustischen Signals von einer Quelle an einem unbekannten Standort an mehreren der SPs (100) und Triangulieren eines bekannten Standorts der Quelle.

5. Verfahren nach Anspruch 4, das ferner aufweist:
Anordnen des Empfängers an mindestens einem Standort auf einem Meeresboden, schwebend im marinen Umgebungsvolumen, auf einem Überwasserfahrzeug, in einem ROV, in einem AUV, in einer Boje und an Land.

6. Verfahren nach einem der Ansprüche 1 bis 5, das ferner aufweist:
Erzeugen eines Datenpakets in mindestens einem der SPs (100) und synchrones oder asynchrones Senden desselben.

7. Verfahren nach einem der Ansprüche 1 bis 6, das ferner aufweist:
Freigeben eines Alarmmodus in mindestens einem der SPs (100), das mit einem Datenempfänger kommuniziert.

8. Verfahren nach einem der Ansprüche 1 bis 7, das ferner aufweist:
Anordnen mindestens einiger der SPs (100) auf einer Bodenfläche des marinen Umgebungsvolumens und/oder
schwebendes Anordnen mindestens einiger der SPs (100) im marinen Umgebungsvolumen und/oder
Anordnen mindestens einiger der SPs (100) außerhalb des marinen Umgebungsvolumens.

9. Verfahren nach einem der Ansprüche 1 bis 8, wobei mindestens einige der SPs (100) einen zusätzlichen Sensor enthalten, um Salzgehalt, Temperatur, Trübung, pH-Wert, organisches Material, gelöste Feststoffe, Phytoplankton, Lichtstrom, Biolumineszenz, O₂, CO₂, Wasserströmungen und/oder Objektgeschwindigkeiten zu detektieren, und/oder
wobei mindestens einige der SPs (100) einen zusätzlichen Sensor enthalten, um Taktsynchronisationsdaten, hoch-, mittel-, niederfrequente akustische Daten, Längstwellenfrequenz- (z. B. Erdbeben-) Daten, (niederfrequente, z. B. <100 Hz) seismische Daten und/oder Teilchengeschwindigkeitsdaten zu detektieren.

10. Verfahren nach einem der Ansprüche 1 bis 9, das ferner aufweist: Kommunizieren zwischen dem SP (100) und einer weiteren Einheit, darunter einem anderen SP (100), einem Überwasserfahrzeug, einem ROV, einem Unterwasser-Sender/Empfänger und/oder einem AUV sowie einem seismischen Einzel- und/oder einem Mehrkomponentensensor und/oder
Kalibrieren der SPs (100), wenn sie im marinen Umgebungsvolumen angeordnet sind.

11. Marines akustisches Echtzeit-Überwachungssystem, das aufweist:
einen Empfänger; und
mehrere Sensorpakete SPs (100), die mit dem Empfänger kommunikationsfähig sind,
wobei jedes Sensorpaket ferner aufweist:
ein Gehäuse;
mindestens einen akustischen Sensor (102);
eine Zeitgeberquelle (135),
eine Stromquelle (125),
einen Datenspeicher (140); und e
ine Datenerfassungskomponente (136);
wobei mindestens einige der SPs (100) im marinen Umgebungsvolumen angeordnet sind; und
wobei die SPs (100) so konfiguriert sind, dass sie eine Hochfrequenz in Zuordnung zu einer Erscheinung in einem Bereich von 200 Hz < f_{high} ≤ 150 kHz und eine Niederfrequenz in Zuordnung zu einer unterschiedlichen Erscheinung in einem Bereich von 0 ≤ f_{low} ≤ 200 Hz im marinen Umgebungsvolumen detektieren, und so konfiguriert sind, dass sie die der Niederfrequenz zugeordnete Erscheinung und die der Hochfrequenz zugeordnete Erscheinung zeitlich korrelieren.

12. Überwachungssystem nach Anspruch 11, wobei mindestens einige der SPs (100) einen zusätzlichen Sensor enthalten, der so konfiguriert ist, dass er Salzgehalt, Temperatur, Trübung, pH-Wert, organisches Material, gelöste Feststoffe, Phytoplankton, Lichtstrom, Biolumineszenz, O₂, CO₂, Wasserströmungen und/oder Objektgeschwindigkeiten detektiert, und/oder
wobei mindestens einige der SPs (100) einen zusätzlichen Sensor enthalten, der so konfiguriert ist, dass er Taktsynchronisationsdaten, hoch-, mittel- und niederfrequente akustische Daten, Längstwellenfrequenz- (z. B. Erdbeben-) Daten, (niederfrequente, z. B. <100 Hz) seismische Daten und/oder Teilchengeschwindigkeitsdaten detektiert.

13. Überwachungssystem nach Anspruch 11 oder 12, wobei die SPs (100) autonom und selbständig sind und/oder
wobei die Zeitgeberquelle eine Atomuhr ist.

14. Überwachungssystem nach einem der Ansprüche 11 bis 13, wobei jedes SP (100) mit einem akustischen Erkennungsalgorithmus und/oder einem akustischen Klassifikationsalgorithmus programmiert ist, der ein Datenpaket zum Senden zum Empfänger erzeugen kann.

15. Überwachungssystem nach einem der Ansprüche 11 bis 14, wobei der Empfänger in einem Überwasserfahrzeug, einem ROV, einem AUV, einer Boje, in einer Wassersäule, auf einem Meeresboden oder an Land angeordnet ist.

16. Überwachungssystem nach einem der Ansprüche 11 bis 15, ferner mit einer Instrumentations-/Berechnungseinheit, die Detektions- und Klassifikationsergebnisse erzeugen kann.

17. Überwachungssystem nach einem der Ansprüche 11 bis 16, wobei jedes SP (100) ein Datenpaket synchron, nach Plan oder asynchron senden kann.

## Revendications

1. Procédé de surveillance d'un volume d'environnement marin, comprenant :
l'utilisation d'un système de surveillance acoustique marine en temps réel comprenant un récepteur et une pluralité d'équipements de capteur, SP (100), dans lequel chaque équipement de capteur (100) comprend en outre un boîtier, au moins un capteur acoustique (102), une source de synchronisation (135), une source d'alimentation (125), une mémoire de données (140), et un composant d'acquisition de données (136) ;
la disposition d'au moins une partie des SP (100) dans le volume d'environnement marin ;
et l'utilisation des SP (100) pour :
détecter une haute fréquence associée à un phénomène dans une plage de 200 Hz *< fₕₐᵤₜₑ* ≤ 150 kHz dans le volume d'environnement marin ;
détecter une fréquence basse associée à un phénomène différent dans une plage de 0 ≤ *f_{basse}* ≤ 200 Hz dans le volume d'environnement marin ; et
corréler temporellement le phénomène associé à la fréquence basse et le phénomène associé à la haute fréquence.

2. Procédé selon la revendication 1, comprenant en outre :
la détection d'une haute fréquence associée à un objet marin avant la détection d'une fréquence basse associée à un événement sismique marin ;
la détection de la fréquence basse associée à un événement sismique marin ; et
la détection de la haute fréquence associée à l'objet marin après la détection de la fréquence basse associée à l'événement sismique marin.

3. Procédé selon la revendication 2, comprenant en outre :
la détection de la haute fréquence associée à un objet marin en mouvement.

4. Procédé selon l'une quelconque des revendications 1 à 3, comprenant en outre :
la corrélation temporelle d'une détection d'un signal acoustique à partir d'une source à un emplacement inconnu à une pluralité des SP (100) et la triangulation d'un emplacement connu de la source.

5. Procédé selon la revendication 4, comprenant en outre :
la disposition du récepteur à au moins un emplacement d'un fond marin, suspendu dans le volume d'environnement marin, sur un vaisseau de surface, dans un ROV, dans un AUV, dans une bouée, et sur terre.

6. Procédé selon l'une quelconque des revendications 1 à 5, comprenant en outre :
la création d'un paquet de données dans au moins l'un des SP (100) et sa transmission de manière synchrone ou asynchrone.

7. Procédé selon l'une quelconque des revendications 1 à 6, comprenant en outre :
l'activation d'un mode d'alerte dans au moins l'un des SP (100) qui communique avec un récepteur de données.

8. Procédé selon l'une quelconque des revendications 1 à 7, comprenant en outre :
la disposition d'au moins une partie des SP (100) sur une surface de fond du volume d'environnement marin, et/ou
la disposition d'au moins une partie des SP (100) suspendus dans le volume d'environnement marin, et/ou
la disposition d'au moins une partie des SP (100) à l'extérieur du volume d'environnement marin.

9. Procédé selon l'une quelconque des revendications 1 à 8, dans lequel au moins une partie des SP (100) contiennent un capteur supplémentaire pour détecter au moins l'un de la salinité, la température, la turbidité, le pH, la matière organique, les solides dissous, le phytoplancton, le flux de lumière, la bioluminescence, l'O₂, le CO₂, des courants d'eau, et les vitesses d'objets, et/ou
dans lequel au moins une partie des SP (100) contiennent un capteur supplémentaire pour détecter au moins l'un de données de synchronisation d'horloge, de données acoustiques haute, moyenne, basse fréquence, de données de très haute fréquence (par ex. tremblement de terre), de données sismiques (basse fréquence, par ex. < 100 Hz), et des données de vitesse de particules.

10. Procédé selon l'une quelconque des revendications 1 à 9, comprenant en outre la communication entre le SP (100) et une autre unité incluant au moins l'un d'un SP (100) différent, d'un vaisseau de surface, d'un ROV, d'un émetteur-récepteur sous-marin, et d'un AUV, et un capteur sismique à un et/ou multiples composants, et/ou l'étalonnage des SP (100) quand ils sont disposés dans le volume d'environnement marin.

11. Système de surveillance acoustique marine en temps réel comprenant :
un récepteur ; et
une pluralité d'équipements de capteur, SP (100), pouvant communiquer avec le récepteur,
dans lequel chaque équipement de capteur comprend en outre :
un boîtier ;
au moins un capteur acoustique (102) ;
une source de synchronisation (135) ;
une source d'alimentation (125) ;
une mémoire de données (140) ; et
un composant d'acquisition de données (136) ;
dans lequel au moins une partie des SP (100) sont disposés dans le volume d'environnement marin ; et
dans lequel les SP (100) sont configurés pour détecter une haute fréquence associée à un phénomène dans une plage de 200 Hz < *fₕₐᵤₜₑ* ≤ 150 kHz et une fréquence basse associée à un phénomène différent dans une plage de 0 ≤ *f_{basse}* ≤ 200 Hz dans le volume d'environnement marin, et sont configurés pour corréler temporellement le phénomène associé à la fréquence basse et le phénomène associé à la haute fréquence.

12. Système de surveillance selon la revendication 11, dans lequel au moins une partie des SP (100) contiennent un capteur supplémentaire configuré pour détecter au moins l'un de la salinité, la température, la turbidité, le pH, la matière organique, les solides dissous, le phytoplancton, le flux de lumière, la bioluminescence, l'O₂, le CO₂, des courants d'eau, et les vitesses d'objets, et/ou
dans lequel au moins une partie des SP (100) contiennent un capteur supplémentaire configuré pour détecter au moins une de données de synchronisation d'horloge, de données acoustiques haute, moyenne, et basse fréquence, de données de très haute fréquence (par ex. tremblement de terre), de données sismiques (basse fréquence, par ex. < 100 Hz), et des données de vitesse de particules.

13. Système de surveillance selon la revendication 11 ou 12, dans lequel les SP (100) sont autonomes et indépendants, et/ou
dans lequel la source de synchronisation est une horloge atomique.

14. Système de surveillance selon l'une quelconque des revendications 11 à 13, dans lequel chaque SP (100) est programmé avec au moins l'un d'un algorithme de reconnaissance acoustique et d'un algorithme de classification acoustique qui peut générer un paquet de données pour transmission au récepteur.

15. Système de surveillance selon l'une quelconque des revendications 11 à 14, dans lequel le récepteur est disposé dans l'un d'un vaisseau de surface, un ROV, un AUV, une bouée, dans une colonne d'eau, sur un fond marin, sur terre.

16. Système de surveillance selon l'une quelconque des revendications 11 à 15, comprenant en outre une unité d'instrumentation/de calcul qui est capable de générer des résultats de détection et de classification.

17. Système de surveillance selon l'une quelconque des revendications 11 à 16, dans lequel chaque SP (100) peut transmettre un paquet de données soit de manière synchrone, selon un programme, soit de manière asynchrone.
